# EUROPEAN PATENT SPECIFICATION

(11) **EP 4 009 014 B1**
(45) Date of publication and mention of the grant of the patent: **28.10.2026**
(21) Application number: 21211048.0
(22) Date of filing: 29.11.2021
(51) Int. Cl.: G01H 9/00, G01V 1/01, G01V 1/22, G01V 1/36, H04J 14/02

(54) **DETECTION OF SEISMIC DISTURBANCES USING OPTICAL FIBERS**
DETEKTION VON SEISMISCHEN STÖRUNGEN MITHILFE VON GLASFASERN
DÉTECTION DE PERTURBATIONS SISMIQUES UTILISANT DES FIBRES OPTIQUES

(30) Priority: 01.12.2020 US 202017108057
(43) Date of publication of application: 08.06.2022
(73) Proprietor: Nokia Solutions and Networks Oy, 02610 Espoo (FI)
(72) Inventor: LE, Thai Son, Bedminster - NJ, 07921 (US)
(74) Representative: MERH-IP Matias Erny Reichl Hoffmann Patentanwälte PartG mbB

(56) References cited:
- EP-A1- 3 404 852
- EP-A1- 3 404 855
- EP-A2- 2 796 847
- WO-A1-2018/156132
- WO-A1-2021/168033
- US-A1- 2013 336 654
- US-B2- 7 885 539

## Description

### BACKGROUND

### Field

Various example embodiments relate to seismography and, more specifically but not exclusively, to detection of seismic disturbances using terrestrial and/or submarine optical fibers.

### Description of the Related Art

This section introduces aspects that may help facilitate a better understanding of the disclosure. Accordingly, the statements of this section are to be read in this light and are not to be understood as admissions about what is in the prior art or what is not in the prior art.

Sparse seismic instrumentation in the oceans limits earthquake-detection capabilities. For example, the majority of seismic stations are located on land, with only a handful of seismographs being on the ocean floor. As a result, many underwater earthquakes remain under-detected, e.g., because land-based seismic stations are often too far away from the earthquakes' epicenters. Similarly, most tsunami-detection equipment is on shore, which may not be optimal in terms of generating adequate tsunami warnings for the affected coastal communities.
WO 2018/156132 A1 discloses a backscattered signal to be received from a sensing fiber that extends into a wellbore. The backscattered signal is generated based on an optical signal launched into the sensing fiber. A first delayed signal, a second delayed signal, a first non-delayed signal, and a second non-delayed signal are generated from the backscattered signal. A polarization control device shifts a polarization of the first delayed signal or the first non-delayed signal. A first demodulated signal is determined based on the first delayed signal and the first non-delayed signal. A second demodulated signal is determined based on the second delayed signal and the second non-delayed signal. Data about an environment of the wellbore is then determined by processing the first demodulated signal and the second demodulated signal to compensate for noise in the first demodulated signal or the second demodulated signal.
EP 2 796 847 A2 discloses a pressure sensing apparatus having a light source for transmitting pulses of light along a monomode optical fibre. The polarisation of light backscattered from the light pulses in the optical fibre is detected by a polarisation processing unit (PPU) and a photo detector. The change in birefringence can be determined from the detected polarisation of the backscattered light, allowing detection of pressure distribution in the fluid, location of an interface between two fluids of different density, and tsunami detection.
US 2013/336654 A1 discloses, in order to appropriately demultiplex the polarization multiplexed BPSK signal without using a training sequence and decreasing the resistance to a frequency offset, an optical receiver including a coherent optical detection unit receiving an optical signal in which BPSK modulated carrier waves are polarization-multiplexed, performing coherent detection by mixing the received optical signal with local light, and outputting first electrical signals corresponding to the carrier waves; a butterfly FIR filter receiving the first electrical signals and extracting second electrical signals corresponding to each of the carrier waves from the first electrical signals; and a coefficient control unit for calculating a sum of respective phases of the second electrical signals output from the butterfly FIR filter, adaptively controlling tap coefficients of the butterfly FIR filter so that the calculated phase sum may become equal to 0 or pi, and outputting tap coefficients after being controlled to the butterfly FIR filter.
US 7 885 539 B2 discloses a method for detecting and locating faults in an optical transmission path, and to an optical transmission system having such a functionality. By measuring the temporal change in the state of polarization SOP, external influences on a glass fiber cable of a long-haul transmission system, e.g., a WDM transmission system, may be detected. Such fault(s) may be localized with the aid of the relative arrival time of the polarization signal at both sides of a bidirectional transmission system.

### SUMMARY OF SOME SPECIFIC EMBODIMENTS

The present invention is as defined in the appended set of claims. Disclosed herein are various embodiments of an optical communication system that enables any deployed (e.g., long-haul, terrestrial or submarine) fiber-optic cable to function as an earthquake-detection sensor. In the present invention, a wavelength-division-multiplexing (WDM) optical transmitter of one network node is configured to transmit an optical-probe signal together with legacy data-carrying optical signals. At another network node, a low-complexity, low-latency coherent optical receiver is used to obtain time-resolved measurements of the Stokes parameters of the optical-probe signal. The signal-processing chain of the optical receiver employs digital filtering to select frequency components of the measurements streams corresponding to seismic disturbances of the fiber-optical cable connecting the nodes. The selected frequency components are then used to compute values of an earthquake indicator, which are reported to a network controller. Based on such reports from three or more nodes, the network controller can determine the epicenter and magnitude of the earthquake and, if warranted, generate a tsunami forecast.

An example embodiment can beneficially be implemented at a relatively small additional cost, with only small modifications of some of the network's WDM transceivers, and without any modifications of the existing fiber-optic-cable plant.

According to the present invention, provided is an apparatus to provide information on earthquakes, the apparatus comprising: a plurality of network nodes connected by optical fiber cables and an electronic analyzer connected to receive measurements of states of polarization of pairs of light beams, the light beams of each one of the pairs of light beams having traveled in opposite directions between a respective pair of the network nodes via a respective optical fiber cable end-connecting the respective pair of network nodes, different ones of the pairs of light beams having traveled over different ones of the respective optical fiber cables; and wherein the electronic analyzer has circuitry configured to characterize one of the earthquakes based on the measurements of the states of polarization of a plurality of the pairs of light beams, characterized in that each of the network nodes comprises a wavelength-division-multiplexing optical transmitter configured to transmit an optical probe signal together with data-carrying optical signals, wherein the optical probe signal with a frequency is located at a spectral edge of one of the data-carrying optical signals.

Additionally, according to the present invention, provided is a machine-implemented method of providing information on earthquakes, the machine-implemented method comprising the steps of: receiving a pair of light beams at each of a plurality of pairs of network nodes; and (A) receiving measurements of states of polarization of the pairs of light beams, the light beams of each one of the pairs of light beams having traveled in opposite directions between a respective pair of the network nodes via a respective optical fiber cable end-connecting the respective pair of network nodes, different ones of the pairs of light beams having traveled over different ones of the respective optical fiber cables; and (B) processing, in electronic circuitry, the measurements of the states of polarization of a plurality of the pairs of light beams to characterize one of the earthquakes, wherein the method further comprises: transmitting, by a wavelength-division-multiplexing optical transmitter of each of the network nodes, an optical-probe signal together with data-carrying optical signals, wherein the optical-probe signal has a frequency and is located at a spectral edge of one of the data-carrying optical signals.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of one optical fiber line of an optical communication system in which some embodiments may be practiced;
FIG. 2 shows a block diagram of a wavelength-division-multiplexing (WDM) optical transceiver that can be used in the optical communication system of FIG. 1 according to an embodiment;
FIG. 3 graphically illustrates certain spectral characteristics of the WDM optical transceiver of FIG. 2 according to an embodiment;
FIG. 4 shows a block diagram of an optical receiver that can be used in the WDM optical transceiver of FIG. 2 according to an embodiment;
FIG. 5 shows a graphical representation of a state of polarization (SOP) using the Poincare sphere;
FIG. 6 shows a block diagram of a digital signal processor (DSP) that can be used in the optical transceiver of FIG. 4 according to an embodiment;
FIG. 7 shows a block diagram of a fiber-optic network in which some embodiments may be practiced; and
FIG. 8 shows a flowchart of an example signal-processing method that can be used in the fiber-optic network of FIG. 7 according to an embodiment.

### DETAILED DESCRIPTION

Some embodiments may benefit from the use of apparatus, method, and some features disclosed in U.S. Patent Application No. 16/988,874, filed on 10-Aug-2020.

Although some example embodiments are described herein below in reference to submarine optical fibers and/or submarine fiber-optic cables, a person of ordinary skill in the art will readily understand, based on the provided description, how to make and use embodiments that employ terrestrial optical fibers and/or terrestrial fiber-optic cables.

Some embodiments may be used for detection of earthquakes and/or prediction of tsunami waves.

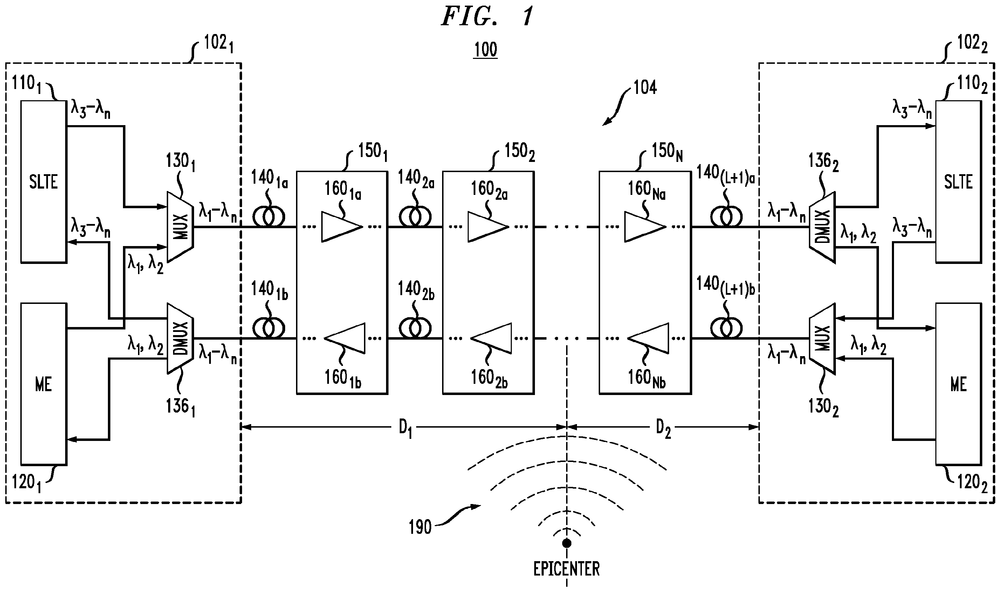

FIG. 1 shows a block diagram of an optical fiber line of a portion of an optical communication system **100** in which some embodiments may be practiced. System **100** is a long-haul submarine communication system comprising landing stations **102₁** and **102₂** connected by way of a wet cable plant **104.** Landing stations **102₁** and **102₂** are typically further connected to respective terrestrial networks (not explicitly shown in FIG. 1). In an alternative embodiment, system **100** may have one or more additional landing stations connected to different wet cable plant(s), i.e., having a similar form to the wet cable plant **104,** as known in the pertinent art, e.g., using one or more branching units and/or completely different submarine fiber cable lines between the additional landing stations (not explicitly shown in FIG. 1).

In an example embodiment, wet cable plant **104** comprises an undersea cable system that includes, *inter alia,* submersible optical repeaters **150₁-150_{L}** serially connected by spans **140** of optical fiber, e.g., as indicated in FIG. 1, where L is a positive integer. In the shown embodiment, each span **140ᵢ** includes two optical fibers, which are labeled **140ᵢₐ** and **140_{ib},** respectively, where i=1, 2, ..., L+1. The number L of optical repeaters **150** used in wet cable plant **104** depends on the particular embodiment and may be in the range, e.g., from 1 to ~200. A typical length of a fiber span **140i** may range from ~50 km to ~150 km, depending on the distance between landing stations **102₁** and **102₂.** In some embodiments, wet cable plant **104** may not have any optical repeaters between landing stations **102₁** and **102₂.**

In the shown embodiment, an optical repeater **150ⱼ** comprises optical amplifiers (OAs) **160ⱼₐ** and **160_{jb},** where j=1, 2, ..., L. Optical amplifier **160ⱼₐ** is configured to amplify optical signals traveling towards landing station **102₂.** Optical amplifier **160_{jb}** is similarly configured to amplify optical signals traveling towards landing station **102₁.** In an example embodiment, an optical amplifier **160ⱼ** can be implemented as known in the pertinent art, e.g., using an erbium-doped fiber, a gain-flattening filter, and one or more laser-diode pumps. The laser diodes can be powered by a DC current from the corresponding shore-based power-feeding equipment (PFE, not explicitly shown in FIG. 1), fed through the electrical conductor(s) of the corresponding submarine cable, which also typically contains optical fibers **140ᵢₐ** and **140_{ib}.** In some embodiments, the electrical conductors (e.g., wires) may be located near the center of the submarine cable. In some other embodiments, the electrical conductors may have a generally tubular shape, e.g., with a ring-like cross-section in a plane orthogonal to the longitudinal axis of the submarine cable.

In an alternative embodiment, optical repeaters **150** can be designed for two, three, four, or more pairs of optical fibers **140ᵢ** connected thereto at each side thereof. For example, an optical repeater **150** designed to be compatible with a four-fiber-pair submarine cable typically includes eight optical amplifiers **160** arranged in four amplifier pairs, each pair being similar to the pair of optical amplifiers **160ⱼₐ** and **160_{jb}.**

Optical repeater **150ⱼ** may also comprise a supervisory optical circuit (not explicitly shown in FIG. 1) that enables monitoring equipment (ME) units **120₁** and **120₂** located at landing stations **102₁** and **102₂,** respectively, to monitor the operating status of the optical repeaters. Some embodiments of the supervisory optical circuit are disclosed, e.g., in European Patent Application Nos. EP17305569 and EP17305570.

In an example embodiment, each of ME units **120₁** and **120₂** is configured to use dedicated supervisory wavelengths (labeled λ₁ and λ₂) for respective supervisory signals that can be sent through the corresponding fiber(s) **140** towards the remote landing station **102.** The supervisory optical circuit of each optical repeater **150ⱼ** is configured to loop back, in the opposite direction, at least a portion of a supervisory optical signal. As a result, ME unit **120₁** can receive a looped-back supervisory optical signal comprising the portions of the original supervisory optical signal returned to that ME unit by the different supervisory optical circuits of different optical repeaters **150₁-150_{N}.** Similarly, ME unit **120₂** can receive a looped-back supervisory optical signal comprising the portions of the corresponding supervisory optical signal returned to that ME unit by the different supervisory optical circuits of different optical repeaters **150₁-150_{N}.** The looped-back supervisory optical signals received by ME units **120₁** and **120₂** can be processed and analyzed to determine the present operating status and/or certain operating characteristics of at least some or all of optical repeaters **150₁-150_{N}** in wet cable plant **104.** The determined parameters may include but are not limited to: (i) input and output signal levels and the gains of some or all individual optical amplifiers (OAs) **160ⱼₐ** and **160_{jb}**; (ii) non-catastrophic faults in individual optical fibers **140ᵢ,** such as any gradual loss increases therein; and (iii) catastrophic failures in individual optical repeaters **150ⱼ** and/or optical fibers **140ᵢ.**

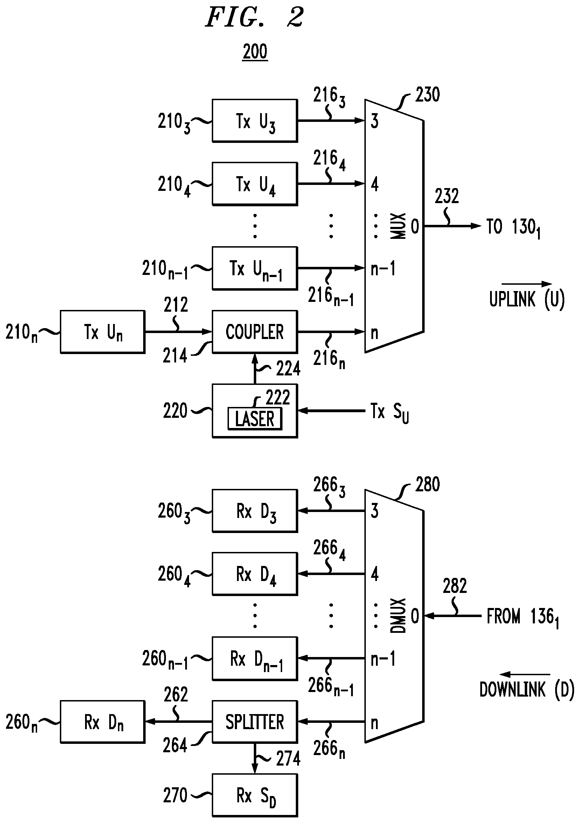

Landing station **102₁** comprises a submarine line terminal equipment (SLTE) unit **110₁** and ME unit **120₁** connected to wet cable plant **104** by way of an optical wavelength multiplexer (MUX) **130₁** and an optical wavelength demultiplexer (DMUX) **136₁** as indicated in FIG. 1. In an example embodiment, SLTE unit **110₁** includes a wavelength-division-multiplexing (WDM) transceiver (not explicitly shown in FIG. 1; see FIG. 2) configured to transmit and receive payload-carrying optical data signals using carrier wavelengths λ₃-λₙ, where n generally denotes the number of WDM channels in system 100. The number n can be in the range, e.g., between ~10 and ~150.

In an example embodiment, carrier wavelengths λ₁-λₙ can be selected in accordance with a frequency (wavelength) grid, such as a frequency grid that complies with the ITU-T G.694.1 Recommendation. The frequency grid used in system **100** can be defined, e.g., in the frequency range from about 184 THz to about 201 THz, with a 100, 50, 25, or 12.5-GHz spacing of the channels therein. While typically defined in frequency units, the parameters of the grid can equivalently be expressed in wavelength units. For example, in the wavelength range from about 1528 nm to about 1568 nm, the 100-GHz spacing between the centers of neighboring WDM channels is equivalent to approximately 0.8-nm spacing. In alternative embodiments, other fixed or flexible (flex) frequency grids can be used as well.

In operation, MUX **130₁** multiplexes the optical signals of wavelengths λ₃-λₙ generated by SLTE unit **110₁** and the one or more supervisory optical signals of wavelengths λ₁ and λ₂, and applies the resulting multiplexed optical signal to optical fiber **140₁ₐ.** DMUX **136₁** de-multiplexes a multiplexed optical signal received from optical fiber **140_{1b}** into two portions. The first portion has optical signals of wavelengths λ₃-λₙ and is directed to SLTE unit **110₁.** The second portion has the looped-back supervisory optical signals of the one or more wavelengths λ₁ and λ₂ and is directed to ME unit **120₁.**

In an example embodiment, ME unit **120₁** comprises an optical time-domain reflectometer (OTDR, not explicitly shown in FIG. 1) configured to optically probe wet cable plant **104** using wavelengths λ₁ and λ₂. For example, ME unit **120₁** can be designed to perform OTDR measurements by detecting and processing the looped-back supervisory optical signals received from optical repeaters **150₁-150_{N}.** In general, ME unit **120₁** can be configured to use any suitable OTDR method.

Landing station **102₂** is generally analogous to landing station **102₁** and comprises an SLTE unit **110₂,** ME unit **120₂,** a MUX **130₂,** and a DMUX **136₂.** The analogous elements/components of the two landing stations are labeled in FIG. 1 using the same numerical labels, but with different respective subscripts. The descriptions of SLTE unit **110₁,** ME unit **120₁,** MUX **130₁,** and DMUX **136₁** of landing station **102₁** given above generally apply to SLTE unit **110₂,** ME unit **120₂,** MUX **130₂,** and DMUX **136₂,** respectively, of landing station **102₂** and are not repeated here.

In various embodiments, each of landing stations **102₁** and **102₂** may further include one or more of the following conventional elements/components: (i) power feeding equipment; (ii) system supervisory equipment; (iii) network management equipment; (iv) cable termination boxes; (v) network protection equipment; and (vi) various interface circuits.

When an earthquake occurs in relative proximity to system **100,** mechanical disturbances **190,** such as shock waves and seismic waves caused thereby, travel from the epicenter through the Earth's crust to eventually reach wet cable plant **104.** Given a sufficiently strong earthquake in sufficiently close proximity to at least some of the optical fibers **140,** mechanical disturbances **190** may cause optical-signal perturbations therein detectable by landing stations **102₁** and **102₂,** e.g., as described below. Appropriate signal processing can then be used, e.g., to accurately estimate the distances D₁ and D₂ from the incidence point at which mechanical disturbances **190** first reach the corresponding optical fibers **140** to the landing stations **102₁** and **102₂,** respectively.

FIG. 2 shows a block diagram of a WDM optical transceiver **200** that can be used in SLTE unit **110₁** according to an embodiment. The transmit and receive optical channels corresponding to transceiver **200** are illustratively referred to as being the "uplink" (or U) channels and "downlink" (or D) channels, respectively. The indexing of the optical channels in FIG. 2 is consistent with the indexing used in FIG. 1, wherein SLTE unit **110₁** uses the wavelengths λ₃-λₙ, and ME unit **120₁** uses wavelengths λ₁-λ₂. A block diagram representing an embodiment of a WDM optical transceiver that can be used in SLTE unit **110₂** can be obtained by flipping the U and D notations in FIG. 2.

Optical transceiver **200** comprises a plurality of individual-channel optical data transmitters **210₃-210ₙ** and an optical-probe transmitter **220.** Optical-probe transmitter **220** comprises a laser **222.** In some embodiments, laser **222** can be a directly modulated laser. In some other embodiments, laser **222** can be a continuous-wave (CW) laser. Optical transmitters **210₃-210ₙ₋₁** are directly connected to the corresponding optical input ports (labeled **3,** ..., **n-1**) of an optical MUX **230.** Optical transmitters **210ₙ** and **220** are, in the illustrated example, connected to a common corresponding optical input port (labeled n) of optical MUX **230** via an optical combiner (e.g., a 3-dB optical coupler) **214,** but in other embodiments, the optical transmitter **220** may connect to a separate optical input port of the corresponding optical MUX (not shown). Optical MUX **230** operates in a conventional manner to wavelength-multiplex optical signals **216₃-216ₙ** applied to optical input ports **3,** ..., **n** thereof to generate an optical output signal **232** at an optical output port **0** thereof. Optical output signal **232** can be directed to optical MUX **130₁** and further uplink (also see FIG. 1). In an example embodiment, all of optical signals **216₃-216ₙ** are spectrally within the amplification band(s) of optical repeaters **150₁-150_{N}.**

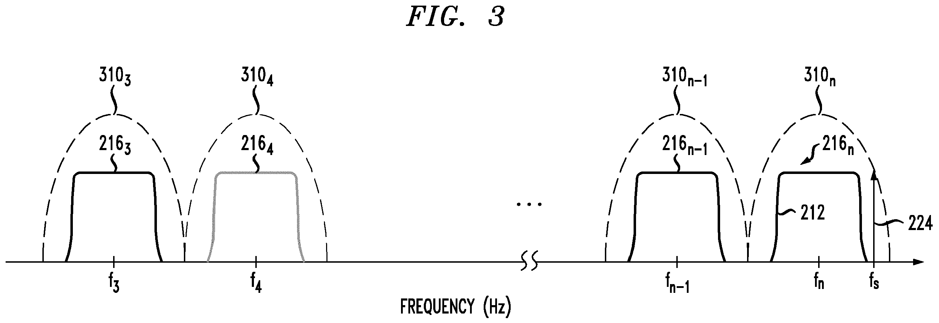

FIG. 3 graphically illustrates spectral characteristics of optical MUX **230** and optical output signal **232** according to an embodiment. More specifically, dashed lines **310₃-310ₙ** graphically show spectral pass bands of optical MUX **230.** Spectral pass band **310₃** corresponds to the optical path between optical input port **3** and optical output port **0** of optical MUX **230.** Spectral pass band **310₄** corresponds to the optical path between optical input port **4** and optical output port **0** of optical MUX **230,** and so on. Spectral pass band **310ₙ₋₁** corresponds to the optical path between optical input port **n-1** and optical output port **0** of optical MUX **230.** Spectral pass band **310ₙ** corresponds to the optical path between optical input port **n** and optical output port **0** of optical MUX **230.**

Optical signals **216₃-216ₙ** are spectrally aligned with the spectral pass bands **310₃-310ₙ,** respectively, as indicated in FIG. 3. For example, for each of optical signals **216₃-216ₙ₋₁**, a center frequency of the signal is approximately spectrally aligned with the center frequency of the corresponding one of the spectral pass bands **310₃-310ₙ₋₁.** In an example embodiment, the center frequencies *f*₃, ... *, f*_{*n*-1} of optical signals **216₃-216ₙ₋₁** may correspond to wavelengths λ₃, ..., λ_{*n*-1} of FIG. 1. In some embodiments, the wavelengths λ₃, ..., λ_{*n*-1} may be carrier wavelengths. In some other embodiments, e.g., employing carrier-suppressed modulation, the wavelengths λ₃, ..., λ_{*n*-1} may approximately be the center wavelengths of the corresponding spectral envelopes.

Optical signal **216ₙ** comprises two components, labeled **212** and **224,** respectively (also see FIG. 2). Optical signal **212** is generated by optical transmitter **210ₙ** and is generally analogous to any of the above-described optical signals **216₃-216**_{**n**-}**₁.** The center frequency of optical signal **212** is the frequency *fₙ,* which is approximately spectrally aligned with the center frequency of the spectral pass band **310ₙ.** In an example embodiment, optical signal **224** is a continuous-wave (CW) signal generated by laser **222** and has a much narrower spectral width than that of optical signal **212.** As such, in FIG. 3, optical signal **224** is represented by a spectral line at the frequency *fₛ.* The frequency *fₛ* is near the roll-off edge of the spectral envelope of optical signal **212,** but is still within the spectral pass band **310ₙ.** In other examples useful to understand the present invention, modulated optical signals may be used to implement optical signal **224** as long as the modulation does not cause one or more modulation sidebands to spectrally overlap with optical signal **212.**

In the illustrated example embodiment, the frequency *fₛ* is shown to be in the last optical channel of the corresponding WDM-channel multiplex. In various alternative embodiments, the frequency *fₛ* may be placed within any other selected optical channel in a similar manner.

Referring back to FIG. 2, optical transceiver **200** further comprises a plurality of individual-channel optical data receivers **260₃-260ₙ** and an optical-probe receiver **270.** Optical receivers **260₃-260**_{**n**-**1**} are directly connected to the corresponding optical output ports (labeled **3,** ..., **n-1**) of an optical DMUX **280.** Optical receivers **260ₙ** and **270** are connected to a common corresponding optical output port (labeled **n**) of optical DMUX **280** via an optical splitter **264,** but in other (not-shown) embodiments, may be connected to separate optical output ports of the corresponding optical DMUX. Optical DMUX **280** operates in a conventional manner to wavelength-demultiplex an optical input signal **282** received at an optical input port **0** thereof, e.g., from optical DMUX **136₁** (also see FIG. 1). The resulting demultiplexed optical signals **266₃-266ₙ** are directed from optical output ports **3,** ..., **n** of DMUX **280** to optical receivers **260₃-260ₙ₋₁** and optical splitter **264,** respectively. Optical splitter **264** operates to split optical signal **266ₙ** into optical signals **262** and **274,** which are then applied to optical receivers **260ₙ** and **270,** respectively.

In an example embodiment, optical DMUX **280,** optical input signal **282,** and optical signals **266₃-266ₙ** may have spectral characteristics analogous to those shown in FIG. 3. In some embodiments, optical DMUX **280** may be implemented using a nominal copy of optical MUX **230,** but configured to transmit signals in the opposite direction, i.e., from port **0** to ports **3,** ..., **n.**

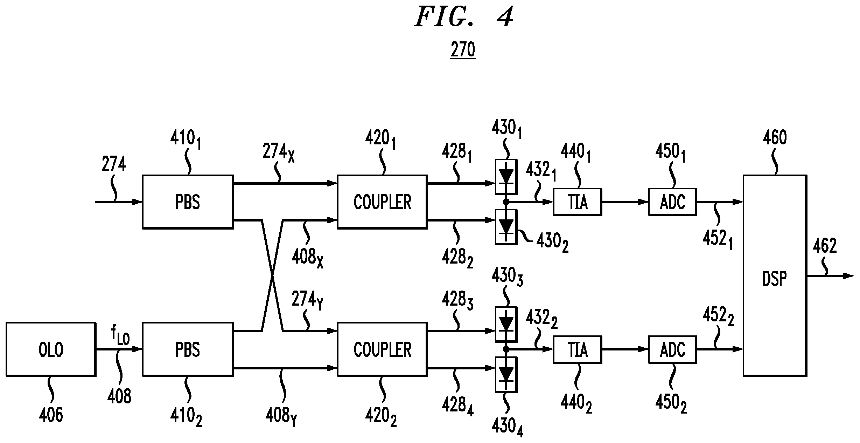

FIG. 4 shows a block diagram of optical receiver **270** according to an embodiment. As shown in FIG. 4, optical receiver **270** comprises an optical local-oscillator (OLO) source (e.g., laser) **406,** polarization beam splitters (PBS's) **410₁** and **410₂,** optical couplers **420₁** and **420₂,** photodiodes **430₁-430₄,** transimpedance amplifiers (TIAs) **440₁** and **440₂,** analog-to-digital converters (ADCs) **450₁** and **450₂,** and a digital signal processor (DSP) **460.** The photodiodes in each of photodiode pairs **430₁/430₂** and **430₃/430₄** are electrically connected in a differential (e.g., balanced) configuration as indicated in FIG. 4.

In operation, PBS **410₁** receives optical signal **274** (also see FIG. 2) and splits the received light into two relatively orthogonal polarization components, labeled **274x** and **274_{Y},** respectively. PBS **410₂** receives an OLO signal **408** generated by OLO source **406** and similarly splits the received light into two relatively orthogonal polarization components, labeled **408x** and **408_{Y},** respectively. In an example embodiment, OLO signal **408** is a CW optical signal that may have a fixed linear polarization and an optical-carrier frequency *f_{LO}.* The frequency difference Δ*f* between the frequencies *f_{LO}* and *fₛ* (FIG. 3) can be expressed as Δ*f =* |*f_{LO} -- fₛ*|. In some embodiments, *f_{LO}* may be larger than*fₛ*. In other embodiments, *f_{LO}* may be smaller than*fₛ*.

Optical coupler **420₁** operates to mix optical signals **274x** and **408x** to generate mixed optical signals **428₁** and **428₂,** the mixed optical signals being light mixtures with different (e.g., by approximately 180 degrees) relative phase shifts between optical signals **274ₓ** and **408ₓ.** Photodiode pair **430₁/430₂** then converts optical signals **428₁** and **428₂** into a corresponding electrical signal **432₁.** Electrical signal **432₁** is amplified using TIA **440₁** and optionally filtered, e.g., low-frequency filtered, and the corresponding amplified electrical signal is converted into a digital electrical signal **452₁** using ADC **450₁.**

Optical coupler **420₂** similarly operates to mix optical signals **274_{Y}** and **408_{Y}** to generate mixed optical signals **428₃** and **428₄.** Photodiode pair **430₃/430₄** converts optical signals **428₃** and **428₄** into a corresponding electrical signal **432₂.** Electrical signal **432₂** is amplified using TIA **440₂** and optionally filtered, e.g., low-frequency filtered, and the corresponding amplified electrical signal is converted into a digital electrical signal **452₂** using ADC **450₂.**

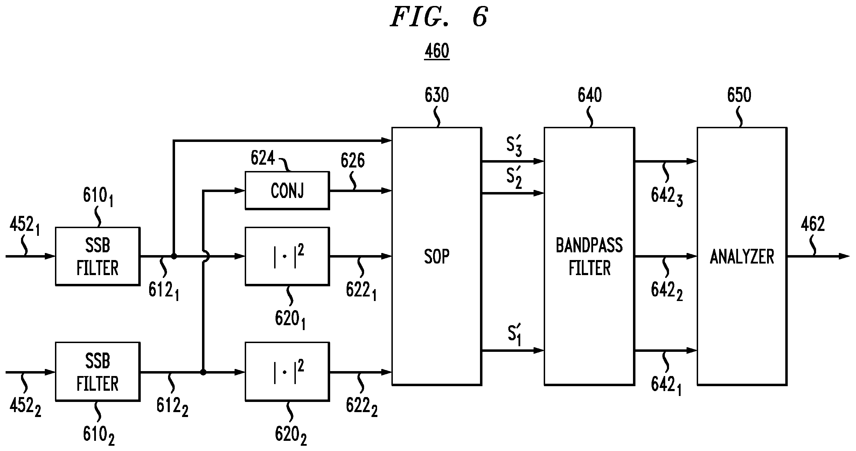

Digital electrical signals **452₁** and **452₂** are applied to DSP **460,** wherein these signals can be processed, e.g., as described below in reference to FIG. 6 and Eqs. (3)-(16), to determine the state of polarization (SOP) of optical signal **274.** In response to certain SOP characteristics exhibited by optical signal **274,** DSP **460** may further operate to generate control messages, warnings, and/or alarms **462** indicating an occurrence of mechanical disturbances **190** (also see FIG. 1).

In an alternative embodiment, optical receiver **270** may be implemented using a coherent optical receiver disclosed in the above-cited U.S. Patent Application No. 16/988,874.

In optics, polarized light can be represented by a Jones vector, and linear optical elements acting on the polarized light and mixtures thereof can be represented by Jones matrices. When light crosses such an optical element, the Jones vector of the output light can be found by taking a product of the Jones matrix of the optical element and the Jones vector of the input light, e.g., in accordance with Eq. (1): $\left[\begin{matrix}{E}_{x}^{r} \\ {E}_{y}^{r}\end{matrix}\right] = J \left(θ, ϕ\right) \left[\begin{matrix}{E}_{x}^{t} \\ {E}_{y}^{t}\end{matrix}\right]$ (1) where and ${E}_{χ}^{t}$ are ${E}_{γ}^{t}$ the x and y electric-field components, respectively, of the Jones vector of the input light; ${E}_{χ}^{r}$ and ${E}_{γ}^{r}$ are the x and *y* electric-field components, respectively, of the Jones vector of the output light; and **J**(*θ*,*ϕ*) is the Jones matrix of the optical element given by Eq. (2): $J \left(θ, ϕ\right) = \left[\begin{matrix}cos \left(θ\right) & - {e}^{- jϕ} sin \left(θ\right) \\ {e}^{jϕ} sin \left(θ\right) & cos \left(θ\right)\end{matrix}\right]$ (2) where 2*θ* and *ϕ* are the elevation and azimuth polarization rotation angles, respectively, the values of which can be used to define the SOP. For clarity, the above example of a Jones matrix does not include effects of optical attenuation and/or amplification.

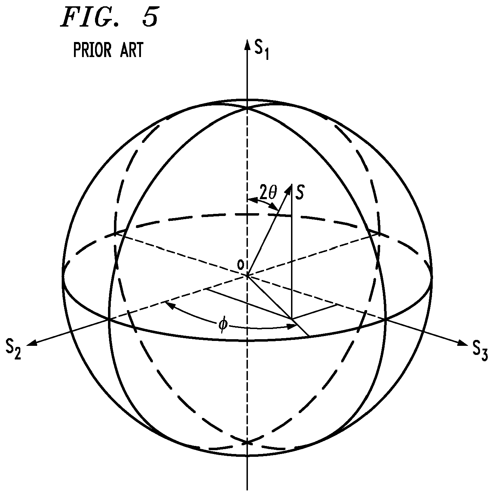

FIG. 5 shows a graphical representation of an SOP using the Poincare sphere. Herein, the Poincare sphere is a sphere of radius *P* centered on the origin of the three-dimensional Cartesian coordinate system, the mutually orthogonal axes S₁, S₂, and S₃ of which represent the corresponding Stokes parameters of the optical field. The radius *P* represents the optical power and is expressed by Eq. (3): $P = \sqrt{{S}_{1}^{2} + {S}_{2}^{2} + {S}_{3}^{2}}$ (3) For a given optical power *P*, different SOPs can be mapped to different respective points on the surface of the Poincare sphere. For example, the vector S shown in FIG. 5 represents one of such SOPs. An SOP rotation can then be visualized as a corresponding rotation of the vector S.

In some cases, it is convenient to use a unity-radius Poincare sphere, for which *P*=1. The unity-radius Poincare sphere can be obtained by normalizing the Stokes parameters with respect to the optical power *P*. For the unity-radius Poincare sphere, the angles *θ* and *ϕ* are related to the normalized Stokes parameters *S*₁'*, S*₂', and *S*₃' as follows: ${S}_{1}^{′} = \frac{{S}_{1}}{P} = cos \left(2θ\right)$ (4a) ${S}_{2}^{′} = \frac{{S}_{2}}{P} = sin \left(2θ\right) cos \left(ϕ\right)$ (4b) ${S}_{3}^{′} = \frac{{S}_{3}}{P} = sin \left(2θ\right) sin \left(ϕ\right)$ (4c)

As used herein, the term "polarization tracking" refers to time-resolved measurements of the SOP of an optical signal. In some embodiments, such polarization tracking may include determination, as a function of time, of the angles *θ* and *ϕ*. In some other embodiments, such polarization tracking may include determination, as a function of time, of the Stokes parameters *S*₁'*, S*₂', and *S*₃' of the normalized Stokes vector S'=(1 *S*₁' *S*₂' *S*₃')*^{T}*, where the superscript *T* means transposed. In yet some other embodiments, such polarization tracking may include determination, as a function of time, of the Stokes parameters *S*₀*=P, S*₁*, S*₂*,* and *S*₃ of the non-normalized Stokes vector **S**=(*S*₀ *S*₁ *S*₂ *S*₃)*^{T}*.

In an example embodiment, DSP **460** (FIG. 4) may be programmed based on the following simplified model of the optical channel corresponding to the probe light of frequency *fₛ* in system **100** (also see FIGs. 2-3).

For simplification, let us assume that the downlink optical signal **224** generated by SLTE unit **110₂** (FIG. 1) has a fixed linear polarization, which can be denoted as the X polarization. In this case, the Jones vector of the downlink optical signal **224** at SLTE unit **110₂** can be expressed as ${\left({E}_{χ}^{t} 0\right)}^{T}$, where ${E}_{χ}^{t}$ is given by Eq. (5): ${E}_{x}^{t} = A ⋅ exp \left(jφ\right)$ (5) where *A* is a constant amplitude; and *φ* is the phase of signal **224.** After propagating through wet cable plant **104,** the downlink optical signal **224** is received by optical receiver **270** of SLTE unit **110₁** as downlink optical signal **274** (also see FIG. 2). Using Eqs. (1)-(2), the Jones vector ${\left({E}_{χ}^{r} {E}_{γ}^{r}\right)}^{T}$ of this downlink optical signal **274** can be expressed as follows: ${E}_{x}^{r} = cos \left(θ\right) ⋅ A ⋅ exp \left(jφ\right)$ (6a) ${E}_{y}^{r} = sin \left(θ\right) ⋅ A ⋅ exp \left(jφ+jϕ\right)$ (6b) The Jones vector ${\left({E}_{χ}^{LO} {E}_{γ}^{LO}\right)}^{T}$ of the OLO signal **408** can be expressed as follows: ${E}_{x}^{LO} = {E}_{y}^{LO} = B ⋅ exp \left(jδ+j2π⋅Δf⋅t\right)$ (7) where *B* is a constant amplitude; *δ* is the phase of signal **408;** Δ*f* is the frequency difference between the frequencies *f_{LO}* and *fₛ* as already indicated above; and *t* is time.

Using Eqs. (6)-(7), the electric fields *E*₁-*E*₄ of the mixed optical signals **428₁-428₄,** respectively, can be expressed as follows: ${E}_{1} = cos \left(θ\right) ⋅ A ⋅ exp \left(jφ\right) + B ⋅ exp \left(jδ+j2π⋅Δf⋅t\right)$ (8a) ${E}_{2} = cos \left(θ\right) ⋅ A ⋅ exp \left(jφ\right) - B ⋅ exp \left(jδ+j2π⋅Δf⋅t\right)$ (8b) ${E}_{3} = sin \left(θ\right) ⋅ A ⋅ exp \left(jφ+jϕ\right) + B ⋅ exp \left(jδ+j2π⋅Δf⋅t\right)$ (8c) ${E}_{4} = sin \left(θ\right) ⋅ A ⋅ exp \left(jφ+jϕ\right) - B ⋅ exp \left(jδ+j2π⋅Δf⋅t\right)$ (8d) The electrical signals **432₁** and **432₂** can then be expressed as follows: ${H}_{x} = {\left|{E}_{1}\right|}^{2} - {\left|{E}_{2}\right|}^{2}$ (9a) ${H}_{y} = {\left|{E}_{3}\right|}^{2} - {\left|{E}_{4}\right|}^{2}$ (9b) where *Hₓ* denotes the electrical signal **432₁;** *H_{y}* denotes the electrical signal **432₂;** and the expressions for *E*₁-*E*₄ are given by Eqs. (8a)-(8d), respectively. For simplification, the optical-to-electrical conversion coefficient is omitted (i.e., is set to one). Expansion of Eqs. (9a) and (9b) with Eqs. (8a)-(8d) reveals that each of *Hₓ* and *H_{y}* has two spectral components located at the frequencies +Δ*f* and *-*Δ*f,* respectively. The negative-frequency components of *Hₓ* and *H_{y}* can be rejected, e.g., using a suitable SSB filter (see, e.g., **610,** FIG. 6), which will only pass the positive-frequency components *Iₓ* and *I_{y}* of signals *Hₓ* and *H_{y},* respectively, for further processing. Herein, SSB stands for "single sideband." It can be verified using Eqs. (8)-(9) that *Iₓ* and *I_{y}* can be expressed as follows: ${I}_{x} = SSB \left({H}_{x}\right) = 2 AB ⋅ cos \left(θ\right) ⋅ exp \left(jφ+jδ+j2π⋅Δf⋅t\right)$ (10a) ${I}_{y} = SSB \left({H}_{y}\right) = 2 AB ⋅ sin \left(θ\right) ⋅ exp \left(jφ+jϕ+jδ+j2π⋅Δf⋅t\right)$ (10b) Using Eqs. (4a)-(4c) and (10a)-(10b), it can further be verified that the non-normalized Stokes vector **S**=(*S*₀ *S*₁ *S*₂ *S*₃)*^{T}* of optical signal **274** can be computed as follows: ${S}_{0} = {\left|{I}_{x}\right|}^{2} + {\left|{I}_{y}\right|}^{2}$ (11a) ${S}_{1} = {\left|{I}_{x}\right|}^{2} - {\left|{I}_{y}\right|}^{2}$ (11b) ${S}_{2} = 2 Re \left({I}_{x}⋅{\left({I}_{y}\right)}^{∗}\right)$ (11c) ${S}_{3} = - 2 Im \left({I}_{x}⋅{\left({I}_{y}\right)}^{∗}\right)$ (11d) where the "*" symbol in the superscript denotes complex conjugation. The normalized Stokes vector **S'**=(1 *S*₁' *S*₂' *S*₃')*^{T}* can then be computed by dividing the components of the resulting non-normalized Stokes vector **S** by the value of *S*₀ computed using Eq. (11a).

In an example embodiment, ADCs **450₁** and **450₂** can be clocked to operate at a relatively high sampling rate, e.g., 10⁹ samples/second or higher. As a result, the Stokes parameters can be updated by DSP **460** at a fast rate to enable polarization tracking with a relatively high time resolution, thereby providing a sufficient volume of SOP-tracking data for accurately extracting therefrom the relevant characteristics of the SOP dynamics and/or kinetics.

Mechanical disturbances **190** typically cause the SOP to be modulated with characteristic frequencies in the range between approximately 0.1 Hz and approximately 2 Hz. The amplitude of the corresponding frequency components may be related to the amplitude of mechanical disturbances **190.** For example, in one possible approximation, a linear dependence of the amplitude of such frequency components on the magnitude of the corresponding earthquake may be assumed for a fixed distance to the epicenter. The attenuation of mechanical disturbances **190** with an increase of the distance to the epicenter may also be incorporated into the signal processing, e.g., as known in the pertinent art.

FIG. 6 shows a block diagram of DSP **460** according to an embodiment. Digital signals **452₁** and **452₂** and control signal **462** are also shown in FIG. 6 to better illustrate the relationship between the circuits of FIGs. 4 and 6.

As shown in FIG. 6, DSP **460** comprises SSB filters **610₁** and **610₂** connected to receive digital signals **452₁** and **452₂,** respectively. In an example embodiment, each of SSB filters **610₁** and **610₂** operates to convert the received real-valued digital signal **452₁** into a corresponding complex-valued digital signal **612ᵢ,** where i=1, 2. For a real-valued time-dependent signal *a*(*t*)*,* the transfer function L(·) of the SSB filter can be related to the Hilbert transform H as follows: $L \left(a\left(t\right)\right) = \frac{1}{2} \left[a\left(t\right)+j{H}^{˜}\left(a\left(t\right)\right)\right]$ (12) A spectral transfer function of the SSB filter **610ᵢ** is approximately the Heaviside step function having the 0-1 transition thereof at the zero frequency.

DSP **460** further comprises squaring circuits **620₁** and **620₂,** a conjugation circuit **624,** an SOP circuit **630,** a band-pass filter **640,** and a signal analyzer **650.**

Squaring circuit **620ᵢ** operates to compute a square of the absolute value of each complex value provided by digital signal **612ᵢ,** thereby generating a corresponding real-valued digital signal **622ᵢ.**

Conjugation circuit **624** outputs a conjugated value in response to each complex value provided by digital signal **612₂,** thereby generating a corresponding complex-valued digital signal **626.**

SOP circuit **630** uses the received digital signals **612₁, 622₁, 622₂,** and **624** to compute three streams of digital values, which are labeled in FIG. 6 as **S₁', S₂',** and **S₃',** respectively. Each of those digital values is proportional to the corresponding one of the Stokes parameters *S*₁'*, S*₂', and *S*₃' of the normalized Stokes vector **S'**=(1 *S*₁' *S*₂' *S*₃')*^{T}.* In one example embodiment, this computation can be performed in SOP circuit **630** in accordance with Eqs. (4) and (11). In another example embodiment, this computation can be performed in SOP circuit **630** in accordance with Eqs. (11b)-(11d). The latter embodiment can be used, e.g., when laser **222** is a relatively stable CW laser generating optical signal **224** having a substantially constant output power.

Band-pass filter **640** operates to digitally filter digital signals **S₁', S₂',** and **S₃'** to pass through only the frequency components **642₁-642₃** of these signals that are spectrally located within the pass band of the filter. In an example embodiment, the pass band of filter **640** may be between approximately 0.1 Hz and approximately 2 Hz. In some embodiments, band-pass filter **640** may be tunable, e.g., capable of controllably changing one or both of the upper and lower boundaries of the pass band thereof.

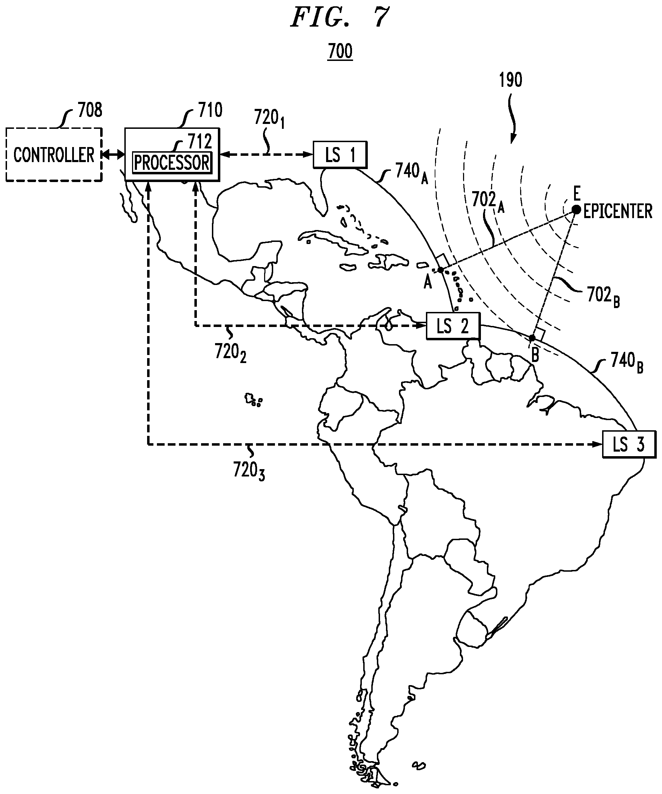

Signal analyzer **650** operates to process digital signals **642₁-642₃** to generate control signal **462.** In an example embodiment, the signal processing implemented in signal analyzer **650** may include the steps of: (i) computing an earthquake indicator *P*(*t*) in response to digital signals **642₁-642₃;** (ii) comparing the earthquake indicator with a threshold value; (iii) recording and time-stamping the instances in which the earthquake indicator *P*(*t*) exceeds the threshold value; (iv) determining a maximum value of the earthquake indicator *P*(*t*) over a time interval; and (iv) reporting observations and measurements to an appropriate control entity (e.g., **710,** FIG. 7) via control signal **462.**

In an example embodiment, signal analyzer **650** may be programmed to compute the earthquake indicator *P*(*t*) as follows: $P \left(t\right) = \left|{F}_{1}\left(t\right)\right| + \left|{F}_{2}\left(t\right)\right| + \left|{F}_{3}\left(t\right)\right|$ (13) where *F*₁(*t*) represents the band-pass-filtered digital signal **S₁';** *F*₂(*t*) represents the band-pass-filtered digital signal **S₂';** *F*₃(*t*) represents the band-pass-filtered digital signal **S₃';** and *t is* time. The maximum value of the earthquake indicator *P*(*t*) can be used, e.g., to estimate the magnitude of the corresponding earthquake, e.g., as described below in reference to FIGs. 7-8.

Let us assume that the earthquake indicator *P_{U}*(*t*) that is being computed at the uplink optical receiver **270** (located at landing station **102₂,** FIG. 1) reaches or exceeds the threshold value *P*_{0*,U*} (i.e., *P_{U}*(*t*)≥ *P*_{0,*U*}) at the time stamp *t_{U}* (i.e., at *t=t_{U}*)*.* Then, the time *t*₀ at which mechanical disturbances 190 hit the corresponding fiber span **140** can be estimated as follows: ${t}_{0} = {t}_{U} - \frac{{n}_{f} ⋅ {D}_{2}}{c}$ (14) where *n_{f}* is the effective refractive index of the fiber; *D*₂ is the fiber length between landing station **102₂** and the location at which the mechanical disturbances **190** first hit the fiber (also see FIG. 1); and c is the speed of light. Similarly, at the downlink optical receiver **270** (located at landing station **102₁,** FIG. 1), the time *t*₀ can be estimated as follows: ${t}_{0} = {t}_{D} - \frac{{n}_{f} ⋅ {D}_{1}}{c}$ (15) where *t_{D}* is the time stamp at which the earthquake indicator *P_{D}*(*t*) that is being computed at the downlink optical receiver **270** reaches or exceeds the threshold value *P*_{0,*D*} (i.e., *P_{D}*(*t*)≥ *P*_{0*,D*}); and *D*₁ is the fiber length between landing station **102₁** and the location at which the mechanical disturbances **190** first hit the fiber (also see FIG. 1). Combining Eqs. (14) and (15), one obtains the following equation: ${t}_{0} = \frac{1}{2} \left({t}_{D}+{t}_{U}-\frac{{n}_{f} ⋅ Z}{c}\right)$ (16) where Z is the total length of optical fiber between landing stations **102₁** and **102₂** at different or opposite ends of the same optical fiber link. Since all quantities in the righthand part of Eq. (16) are observable or known, Eq. (16) can be used to determine *t*₀. Eqs. (14) and (15) can then be used to determine the lengths *D*₁ and *D*₂.

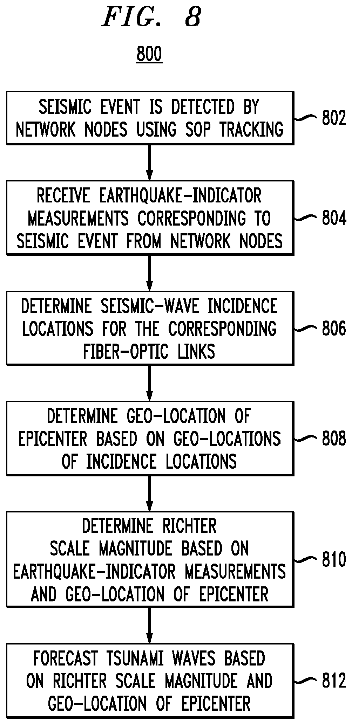

FIG. 7 shows a block diagram of a portion **700** of a fiber-optic network in which some embodiments may be practiced. Network **700** comprises landing stations **LS1, LS2,** and **LS3.** Landing stations **LS1** and **LS2** are connected via a fiber-optic link **740_{A}.** Landing stations **LS2** and **LS3** are connected via a fiber-optic link **740_{B}.** Network **700** further comprises an electronic (e.g., digital) analyzer **710** connected to landing stations **LS1, LS2,** and **LS3** via control links **720₁, 720₂,** and **720₃,** respectively. In case of an earthquake, network **700** can be used to determine the geo-location **E** of the earthquake epicenter and to estimate the magnitude of the earthquake, e.g., using method **800** (FIG. 8). For example, the resulting pressure or displacement waves may spherically radiate from the epicenter, as illustrated, but terrestrial surface features may cause the radiating waves to have differently shaped wave-surfaces, which could be taken into account in an embodiment of method **800** (FIG. 8). In an example embodiment, each of landing stations **LS1, LS2,** and **LS3** may be analogous to the above-described landing station **102ᵢ** (FIG. 1). In some embodiments, electronic analyzer **710** may be located at a corresponding control entity (e.g., a network controller) **708.** In alternative embodiments, other locations of electronic analyzer **710** may also be possible, including distributed configurations in which different parts of the electronic analyzer are placed at two or more different, relatively distanced locations.

In an example embodiment, electronic analyzer **710** has appropriate circuitry, e.g., a digital processor **712,** configured to process the received SOP measurements to characterize an earthquake.

In some embodiments, the corresponding fiber-optic network may comprise additional landing stations **LS** and/or additional fiber-optic links **740** (not explicitly shown in FIG. 7). For example, the two or more optical fiber links used to sense an earthquake may not share a landing station as in FIG. 8 so that measurements at four or more landing stations may be used to characterize an earthquake using method **800** (FIG. 8). Depending on the relative location of the earthquake epicenter **E** and the network topology, a suitable subset of the landing stations **LS** and fiber-optic links **740** may be selected for executing method **800** or other suitable method. For example, a triangulation method may be used when the selected subset of fiber-optic links **740** has three or more links.

FIG. 8 shows a flowchart of an example signal-processing method **800** that can be used in network **700** according to an embodiment. Method **800** is described below with continued reference to FIG. 7. The execution of method **800** can be triggered, e.g., by mechanical disturbances **190** emanating from the epicenter **E** of a sufficiently strong earthquake (also see FIGs. 1 and 7).

At step **802** of method **800,** optical receivers **270** located at landing stations **LS1, LS2,** and **LS3** detect an event in which the corresponding earthquake indicators *P*(*t*) (see, e.g., Eq. (13)) exceed the relevant threshold(s) in response to the mechanical disturbances **190** reaching the fiber-optic links **740_{A}** and **740_{B}.**

At step **804,** landing stations **LS1, LS2,** and **LS3** use control links **720₁, 720₂,** and **720₃,** respectively, to provide the relevant measurements of the event to electronic analyzer **710.** In an example embodiment, landing stations **LS1, LS2,** and **LS3** may collectively provide to electronic analyzer **710** the following measured parameters: (i) the time stamps *t_{U}* and *t_{D}* corresponding to fiber-optic link **740_{A};** (ii) the maximum value *P_{UA}* of the earthquake indicator *P*(*t*) observed for the uplink direction of fiber-optic link **740_{A}**; (iii) the maximum value *P_{DA}* of the earthquake indicator *P*(*t*) observed for the downlink direction of fiber-optic link **740_{A};** (iv) the time stamps *t_{U}* and *t_{D}* corresponding to fiber-optic link **740_{B};** (v) the maximum value *P_{UB}* of the earthquake indicator *P*(*t*) observed for the uplink direction of fiber-optic link **740_{B};** and (vi) the maximum value *P_{DB}* of the earthquake indicator *P*(*t*) observed for the downlink direction of fiber-optic link **740_{B}.**

At step **806,** electronic analyzer **710** uses the time stamps provided thereto at step **804** to determine the locations of points **A** and **B** along the fiber-optic links **740_{A}** and **740_{B},** respectively (also see FIG. 7). More specifically, point **A** is the location along the fiber-optic link **740_{A}** that is hit first by the mechanical disturbances **190.** Similarly, point **B** is the location along the fiber-optic link **740_{B}** that is hit first by the mechanical disturbances **190.** The location of point **A** can be determined, e.g., using Eqs. (14)-(16) and the received time stamps *t_{U}* and *t_{D}* corresponding to the fiber-optic link **740_{A}.** The location of point **B** can similarly be determined, e.g., using Eqs. (14)-(16) and the received time stamps *t_{U}* and *t_{D}* corresponding to the fiber-optic link **740_{B}.**

At step **808,** electronic analyzer **710** uses the geo-locations of the points **A** and **B** inferred from the processing performed at step **806** and the map of network **700** to determine the geo-location of the epicenter **E.** In the shown example, the geo-location of the epicenter **E** is determined as the intersection of lines **702_{A}** and **702_{B},** wherein the line **702_{A}** is locally orthogonal to the fiber-optic link **740_{A}** at point **A,** and the line **702_{B}** is locally orthogonal to the fiber-optic link **740_{B}** at point **B.**

In alternative embodiments of step **808,** electronic analyzer **710** may use the geo-locations of the points **A, B,** and one or more analogous points corresponding to additional fiber-optic links **740** to determine the geo-location of the epicenter **E** by triangulation.

At step **810,** electronic analyzer **710** uses the maximum values *P_{DA}, P_{UA}, P_{DB},* and *P_{UB}* of the earthquake indicators *P*(*t*) to estimate the Richter scale magnitude of the earthquake. In an example embodiment, step **810** may comprise the sub-steps of: (i) scaling the maximum values *P_{DA}, P_{UA}, P_{DB},* and *P_{UB}* by the respective scaling factors representing the estimated attenuation of the seismic waves along the respective propagation paths from the epicenter **E** determined at step **808** to the incidence points **A** and **B** determined at step **806;** (ii) averaging the scaled maximum values computed at sub-step (i); and (iii) converting the average value computed at sub-step (ii) into the corresponding Richter scale magnitude. In an example embodiment, sub-step (iii) can be performed, e.g., using a look-up table compiled based on previous earthquake observations for which the Richter scale magnitudes were also measured by conventional seismological means.

At step **812,** the geo-location of the epicenter **E** determined at step **808** and the Richter scale magnitude determined at step **810** are used, in a conventional manner, to forecast the expected tsunami magnitudes for the affected costal communities. If a significant tsunami wave is being forecast, then appropriate tsunami warnings may be issued, e.g., by way of network controller **708.**

According to an example embodiment disclosed above, e.g., in the summary section and/or in reference to any one or any combination of some or all of FIGs. 1-8, provided is an apparatus to provide information on earthquakes, the apparatus comprising: an electronic analyzer (e.g., **710,** FIG. 7) connected (e.g., via **720,** FIG. 7) to receive measurements of states of polarization of pairs of light beams, the light beams of each one of the pairs of light beams having traveled in opposite directions between a respective pair of network nodes (e.g., **LS1, LS2,** FIG. 7) via a respective optical fiber cable (e.g., **740,** FIG. 7) end-connecting the respective pair of network nodes, different ones of the pairs of light beams having traveled over different ones of the respective optical fiber cables; and wherein the electronic analyzer has circuitry (e.g., **712,** FIG. 7) configured to characterize one of the earthquakes based on the measurements of the states of polarization of a plurality of the pairs of light beams.:
In some embodiments of the above apparatus, the electronic analyzer is configured to estimate a region (e.g., **A,** FIG. 7) of first receipt of seismic waves (e.g., **190,** FIG. 7) of an earthquake at one (e.g., **740₄,** FIG. 7) of the optical fiber cables based on the measurements of states of polarization of the light beams received at both network nodes (e.g., **LS1, LS2,** FIG. 7) end-connected by the one of the optical fiber cables.

In some embodiments of any of the above apparatus, the first receipt is identified by a measure of state of polarization (e.g., *P*(*t*), Eq. (13)) having an above-threshold frequency component spectrally below about 1 Hertz.

In some embodiments of any of the above apparatus, the electronic analyzer is configured to estimate a time (e.g., *t*₀, Eq. (16)) of the first receipt of seismic waves of the earthquake at the one of the optical fiber cables based on the measurements of states of polarization of the light beams received at the both network nodes.

In some embodiments of any of the above apparatus, the electronic analyzer is configured to identify an epicenter (e.g., **E,** FIG. 7) of the earthquake by estimating regions (e.g., **A, B,** FIG. 7) of first receipt of the seismic waves of the earthquake at two or more of the optical fiber cables (e.g., **740_{A}, 740_{B},** FIG. 7) based on the measurements of states of polarization of the light beams traveled over the two or more of the optical fiber cables.

In some embodiments of any of the above apparatus, the electronic analyzer is configured to estimate a time of first receipt of seismic waves of an earthquake at one of the optical fiber cables based on the measurements of states of polarization of the light beams received at both network nodes end-connected by the one of the optical fiber cables.

In some embodiments of any of the above apparatus, each of the measurements of a particular one of the received light beams measures mixtures of the particular one of the light beams with light of an optical local oscillator (e.g., **408,** FIG. 4).

In some embodiments of the above apparatus, the apparatus further comprises one or more filters (e.g., **640,** FIG. 6) to remove from the measurements frequency components spectrally higher than about 1 Hertz.

In some embodiments of any of the above apparatus, each particular pair of the network nodes is configured to optically communicate data therebetween via optical wavelength channels different from a wavelength channel carrying the light beams between the particular pair of optical nodes.

In some embodiments of any of the above apparatus, the light beams are not modulated to carry data streams.

According to another example embodiment disclosed above, e.g., in the summary section and/or in reference to any one or any combination of some or all of FIGs. 1-8, provided is a machine-implemented method of providing information on earthquakes, the machine-implemented method comprising the steps of: (A) receiving (e.g., at **804,** FIG. 8) measurements of states of polarization of pairs of light beams, the light beams of each one of the pairs of light beams having traveled in opposite directions between a respective pair of network nodes (e.g., **LS1, LS2,** FIG. 7) via a respective optical fiber cable (e.g., **740,** FIG. 7) end-connecting the respective pair of network nodes, different ones of the pairs of light beams having traveled over different ones of the respective optical fiber cables; and (B) processing (e.g., at **806-812,** FIG. 8), in electronic circuitry (e.g., **712,** FIG. 7), the measurements of the states of polarization of a plurality of the pairs of light beams to characterize one of the earthquakes.

According to yet another example helpful for understanding the present invention disclosed above, e.g., in the summary section and/or in reference to any one or any combination of some or all of FIGs. 1-8, provided is an apparatus comprising: an optical wavelength demultiplexer (e.g., **280,** FIG. 2) having a plurality of pass bands (e.g., **310,** FIG. 3) to demultiplex optical signals received through an optical fiber (e.g., **140,** FIG. 1; **740_{A},** FIG. 7); a first optical receiver (e.g., **260ₙ,** FIG. 2) connected to the optical wavelength demultiplexer to receive a data-modulated optical signal (e.g., **262,** FIG. 2); and a second optical receiver (e.g., **270,** FIG. 2) connected to the optical wavelength demultiplexer to obtain time-resolved measurements of Stokes parameters of an optical-probe signal (e.g., **274,** FIG. 2), both of the data-modulated optical signal and the optical-probe signal passing through one of the pass bands of the optical wavelength demultiplexer; and wherein the second optical receiver comprises a digital band-pass filter (e.g., **640,** FIG. 6) to filter streams of the time-resolved measurements to select frequency components of the streams corresponding to seismic disturbance of the optical fiber.

In some examples of the above apparatus helpful for understanding the present invention, the apparatus further comprises a plurality of third optical receivers (e.g., **260₃-260ₙ₋₁,** FIG. 2) connected to receive respective data-modulated optical signals (e.g., **266₃-266ₙ₋₁,** FIG. 2) through different respective ones of the pass bands of the optical wavelength demultiplexer.

In some examples of the above apparatus helpful for understanding the present invention, each of the first optical receiver and the third optical receivers is configured to recover data encoded in a corresponding one of the data-modulated optical signals.

A carrier frequency (e.g., *fₛ*, FIG. 3) of the optical-probe signal is different from a center frequency (e.g., *fₙ*, FIG. 3) of the data-modulated optical signal.

In the present invention, a carrier frequency (e.g., *fₛ*, FIG. 3) of the optical-probe signal is spectrally located at a spectral edge of the data-modulated optical signal (e.g., as shown in FIG. 3).

In some embodiments of any of the above apparatus, a carrier frequency (e.g., *fₛ*, FIG. 3) of the optical-probe signal is spectrally located outside a spectral envelope (e.g., **212,** FIG. 3) of the data-modulated optical signal (e.g., as shown in FIG. 3).

In some examples of the above apparatus helpful for understanding the present invention, the second optical receiver comprises an optical local oscillator (e.g., **406,** FIG. 4) for coherently detecting the optical-probe signal.

In some examples of the above apparatus helpful for understanding the present invention, the second optical receiver is configured to: compute an earthquake indicator (e.g., *P*(*t*), Eq. (13)) based on the selected frequency components of the streams; and record and time-stamp a value of the earthquake indicator if said value exceeds a fixed threshold value.

In some examples of the above apparatus helpful for understanding the present invention, the apparatus further comprises an electronic analyzer (e.g., **710,** FIG. 7) connected (e.g., via **720₁,** FIG. 7) to receive the time-stamped value of the earthquake indicator from the second optical receiver and further connected to receive (e.g., via **720₂,** FIG. 7) another time-stamped value of the earthquake indicator from a network node (e.g., **LS2,** FIG. 7); and wherein the optical wavelength demultiplexer and the network node are end-connected to opposite ends of the optical fiber (e.g., **740_{A},** FIG. 7).

In some examples of the above apparatus helpful for understanding the present invention, the electronic analyzer is configured to determine (e.g., **808,** FIG. 8) a geo-location (e.g., **E,** FIG. 7) of an earthquake epicenter based on said received time-stamped values of the earthquake indicator.

In some examples of the above apparatus helpful for understanding the present invention, the electronic analyzer is configured to estimate (e.g., **810,** FIG. 8), based on said received time-stamped values of the earthquake indicator, a Richter-scale magnitude of an earthquake.

In some examples of the above apparatus helpful for understanding the present invention, the electronic analyzer is configured to generate (e.g., **812,** FIG. 8) a forecast of tsunami waves based on said received time-stamped values of the earthquake indicator.

In some examples of the above apparatus helpful for understanding the present invention, the optical-probe signal is a continuous-wave optical signal.

In some examples of the above apparatus helpful for understanding the present invention, the digital band-pass filter has a pass band between 0.1 Hz and 1 Hz.

In some examples of the above apparatus helpful for understanding the present invention, the digital band-pass filter is tunable.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the invention as defined in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The described embodiments are to be considered in all respects as only illustrative and not restrictive. In particular, the scope of the invention is defined by the appended claims rather than by the description and figures herein.

The description and drawings merely illustrate the principles of the disclosure. It will thus be appreciated that those of ordinary skill in the art will be able to devise various arrangements without departing from the scope of the appended claims. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"SUMMARY OF SOME SPECIFIC EMBODIMENTS" in this specification is intended to introduce some example embodiments, with additional embodiments being described in "DETAILED DESCRIPTION" and/or in reference to one or more drawings. "SUMMARY OF SOME SPECIFIC EMBODIMENTS" is not intended to identify essential elements or features of the claimed subject matter, nor is it intended to limit the scope of the claimed subject matter.

## Claims

1. An apparatus to provide information on earthquakes, the apparatus comprising:
a plurality of network nodes (LS1, LS2, LS3) connected by optical fiber cables (740_{A}, 740_{B});
an electronic analyzer (710) connected to receive measurements of states of polarization of pairs of light beams, the light beams of each one of the pairs of light beams having traveled in opposite directions between a respective pair (LS1, LS2) of the network nodes via a respective one (740_{A}) of the optical fiber cables end-connected therebetween, different ones of the pairs of light beams having traveled over different ones of the respective optical fiber cables; and
wherein the electronic analyzer has circuitry (712) configured to characterize one of the earthquakes based on the measurements of the states of polarization of a plurality of the pairs of light beams;
**characterized in that**
each of the network nodes (LS1, LS2) comprises a wavelength-division-multiplexing (WDM) optical transmitter configured to transmit an optical probe signal (224) together with data-carrying optical signals (216₃-216ₙ),
wherein the optical probe signal (224) with a frequency (fₛ) is located at a spectral edge of one (216ₙ) of the data-carrying optical signals (216₃-216ₙ).

2. The apparatus of claim 1, wherein the electronic analyzer is configured to estimate a region of first receipt of seismic waves of an earthquake at a particular one of the optical fiber cables based on the measurements of states of polarization of the light beams received at both of the network nodes to which the particular one of the optical fiber cables end-connects.

3. The apparatus of claim 2, wherein the electronic analyzer is configured to estimate a time of the first receipt of seismic waves of the earthquake at the particular one of the optical fiber cables based on the measurements of states of polarization of the light beams received at both of the network nodes to which the particular one of the optical fiber cables end-connects.

4. The apparatus of claim 2, wherein the electronic analyzer is configured to identify an epicenter of the earthquake by estimating regions of first receipt of the seismic waves of the earthquake at two or more of the optical fiber cables based on the measurements of states of polarization of the light beams traveled over the two or more of the optical fiber cables.

5. The apparatus of claim 1, wherein the electronic analyzer is configured to estimate a time of first receipt of seismic waves of an earthquake at a particular one of the optical fiber cables based on the measurements of states of polarization of the light beams received at both of the network nodes to which the particular one of the optical fiber cables end-connects.

6. The apparatus of claim 1, wherein each of the measurements of a particular one of the received light beams measures mixtures of the particular one of the light beams with light of an optical local oscillator (408).

7. The apparatus of claim 1, further comprising one or more filters (640) to remove, from the measurements, frequency components spectrally higher than about 1 Hertz.

8. The apparatus of claim 1, wherein each particular one of the pairs of the network nodes is configured to optically communicate data therebetween via optical wavelength channels different from a wavelength channel carrying the light beams between the particular one of the pairs of the network nodes.

9. The apparatus of claim 1, wherein the light beams are not modulated to carry data streams.

10. A machine-implemented method of providing information on earthquakes, the machine-implemented method comprising:
receiving a pair of light beams at each of a plurality of pairs of network nodes (LS1, LS2, LS3); and
receiving measurements of states of polarization of the pairs of light beams, the light beams of each one of the pairs of light beams having traveled in opposite directions between a respective one (LS1, LS2) of the pairs of network nodes via a respective optical fiber cable (740_{A}) end-connected therebetween, different ones of the pairs of light beams having traveled over different ones of the respective optical fiber cables; and
processing, in electronic circuitry, the measurements of the states of polarization of a plurality of the pairs of light beams to characterize one of the earthquakes;
wherein the method comprises:
transmitting, by a wavelength-division-multiplexing (WDM) optical transmitter of each of the network nodes (LS1, LS2), an optical-probe signal (224) together with data-carrying optical signals (216₃ - 216ₙ), wherein the optical-probe signal (224) has a frequency (fₛ) and is located at a spectral edge of one (216ₙ) of the data-carrying optical signals (216₃-216ₙ).

## Patentansprüche

1. Vorrichtung zum Bereitstellen von Informationen über Erdbeben, wobei die Vorrichtung umfasst:
eine Vielzahl von Netzwerkknoten (LS1, LS2, LS3), die durch optische Faserkabel (740_{A}, 740_{B}) verbunden sind;
einen elektronischen Analysator (710), der verbunden ist, um Messungen von Polarisationszuständen von Paaren von Lichtstrahlen zu empfangen, wobei die Lichtstrahlen jedes der Paare von Lichtstrahlen in entgegengesetzten Richtungen zwischen einem jeweiligen Paar (LS1, LS2) der Netzwerkknoten über ein jeweiliges (740_{A}) der optischen Faserkabel, die dazwischen endverbunden sind, gewandert sind, wobei verschiedene der Paare von Lichtstrahlen über verschiedene der jeweiligen optischen Faserkabel gewandert sind; und
wobei der elektronische Analysator Schaltkreise (712) aufweist, die konfiguriert sind, eines der Erdbeben auf der Grundlage der Messungen der Polarisationszustände einer Vielzahl der Paare von Lichtstrahlen zu charakterisieren;
**dadurch gekennzeichnet, dass**
jeder der Netzwerkknoten (LS1, LS2) einen optischen Sender mit Wellenlängenmultiplex (WDM) umfasst, der konfiguriert ist, ein optisches Sondensignal (224) zusammen mit datenführenden optischen Signalen (216₃-216n) zu senden,
wobei das optische Sondensignal (224) mit einer Frequenz (fs) an einem spektralen Rand eines (216n) der datenführenden optischen Signale (216₃-216n) angeordnet ist.

2. Vorrichtung nach Anspruch 1, wobei der elektronische Analysator konfiguriert ist, einen Bereich des ersten Empfangs von seismischen Wellen eines Erdbebens an einem bestimmten der optischen Faserkabel auf der Grundlage der Messungen von Polarisationszuständen der Lichtstrahlen, die an beiden Netzwerkknoten empfangen werden, an die das bestimmte der optischen Faserkabel endverbunden ist, zu schätzen.

3. Vorrichtung nach Anspruch 2, wobei der elektronische Analysator konfiguriert ist, einen Zeitpunkt des ersten Empfangs von seismischen Wellen des Erdbebens an dem bestimmten der optischen Faserkabel auf der Grundlage der Messungen von Polarisationszuständen der Lichtstrahlen, die an beiden Netzwerkknoten empfangen werden, an die das bestimmte der optischen Faserkabel endverbunden ist, zu schätzen.

4. Vorrichtung nach Anspruch 2, wobei der elektronische Analysator konfiguriert ist, ein Epizentrum des Erdbebens zu identifizieren, indem Bereiche des ersten Empfangs der seismischen Wellen des Erdbebens an zwei oder mehr der optischen Faserkabel auf der Grundlage der Messungen von Polarisationszuständen der Lichtstrahlen, die über die zwei oder mehr der optischen Faserkabel gewandert sind, geschätzt werden.

5. Vorrichtung nach Anspruch 1, wobei der elektronische Analysator konfiguriert ist, einen Zeitpunkt des ersten Empfangs von seismischen Wellen eines Erdbebens an einem bestimmten der optischen Faserkabel auf der Grundlage der Messungen von Polarisationszuständen der Lichtstrahlen, die an beiden Netzwerkknoten empfangen werden, an die das bestimmte der optischen Faserkabel endverbunden ist, zu schätzen.

6. Vorrichtung nach Anspruch 1, wobei jede der Messungen eines bestimmten der empfangenen Lichtstrahlen Mischungen des bestimmten der Lichtstrahlen mit Licht eines optischen Lokaloszillators (408) misst.

7. Vorrichtung nach Anspruch 1, ferner umfassend ein oder mehrere Filter (640), um aus den Messungen Frequenzkomponenten zu entfernen, die spektral höher als etwa 1 Hertz sind.

8. Vorrichtung nach Anspruch 1, wobei jedes bestimmte Paar der Paare von Netzwerkknoten konfiguriert ist, Daten untereinander optisch über optische Wellenlängenkanäle zu kommunizieren, die sich von einem Wellenlängenkanal unterscheiden, der die Lichtstrahlen zwischen dem bestimmten Paar der Paare von Netzwerkknoten trägt.

9. Vorrichtung nach Anspruch 1, wobei die Lichtstrahlen nicht moduliert sind, um Datenströme zu tragen.

10. Maschinenimplementiertes Verfahren zum Bereitstellen von Informationen über Erdbeben, wobei das maschinenimplementierte Verfahren umfasst:
Empfangen eines Paares von Lichtstrahlen an jeder einer Vielzahl von Paaren von Netzwerkknoten (LS1, LS2, LS3); und
Empfangen von Messungen von Polarisationszuständen der Paare von Lichtstrahlen, wobei die Lichtstrahlen jedes der Paare von Lichtstrahlen in entgegengesetzten Richtungen zwischen einem jeweiligen (LS1, LS2) der Paare von Netzwerkknoten über ein jeweiliges optisches Faserkabel (740_{A}), das dazwischen endverbunden ist, gewandert sind, wobei verschiedene der Paare von Lichtstrahlen über verschiedene der jeweiligen optischen Faserkabel gewandert sind; und
Verarbeiten, in elektronischen Schaltkreisen, der Messungen der Polarisationszustände einer Vielzahl der Paare von Lichtstrahlen, um eines der Erdbeben zu charakterisieren;
wobei das Verfahren umfasst:
Senden, durch einen optischen Sender mit Wellenlängenmultiplex (WDM) jedes der Netzwerkknoten (LS1, LS2), eines optischen Sondensignals (224) zusammen mit datenführenden optischen Signalen (216₃ - 216n), wobei das optische Sondensignal (224) eine Frequenz (fs) hat und an einem spektralen Rand eines (216n) der datenführenden optischen Signale (216₃-216n) angeordnet ist.

## Revendications

1. Appareil pour fournir des informations sur des tremblements de terre, l'appareil comprenant :
une pluralité de nœuds de réseau (LS1, LS2, LS3) connectés par des câbles à fibres optiques (740_{A}, 740_{B}) ;
un analyseur électronique (710) connecté pour recevoir des mesures d'états de polarisation de paires de faisceaux lumineux, les faisceaux lumineux de chacune des paires de faisceaux lumineux ayant voyagé dans des directions opposées entre une paire respective (LS1, LS2) des nœuds de réseau via un câble respectif (740_{A}) des câbles à fibres optiques connecté de bout en bout entre ceux-ci, des faisceaux différents des paires de faisceaux lumineux ayant voyagé sur des câbles différents des câbles à fibres optiques respectifs ; et
dans lequel l'analyseur électronique comporte des circuits (712) configurés pour caractériser l'un des tremblements de terre sur la base des mesures des états de polarisation d'une pluralité des paires de faisceaux lumineux ;
**caractérisé en ce que**
chacun des nœuds de réseau (LS1, LS2) comprend un émetteur optique à multiplexage par répartition en longueur d'onde (WDM) configuré pour émettre un signal de sonde optique (224) conjointement avec des signaux optiques porteurs de données (216₃-216n),
dans lequel le signal de sonde optique (224) ayant une fréquence (fs) est situé à un bord spectral de l'un (216n) des signaux optiques porteurs de données (216₃-216n).

2. Appareil selon la revendication 1, dans lequel l'analyseur électronique est configuré pour estimer une région de première réception d'ondes sismiques d'un tremblement de terre au niveau d'un câble particulier parmi les câbles à fibres optiques sur la base des mesures d'états de polarisation des faisceaux lumineux reçus aux deux nœuds de réseau auxquels le câble particulier parmi les câbles à fibres optiques est connecté de bout en bout.

3. Appareil selon la revendication 2, dans lequel l'analyseur électronique est configuré pour estimer un instant de la première réception d'ondes sismiques du tremblement de terre au niveau du câble particulier parmi les câbles à fibres optiques sur la base des mesures d'états de polarisation des faisceaux lumineux reçus aux deux nœuds de réseau auxquels le câble particulier parmi les câbles à fibres optiques est connecté de bout en bout.

4. Appareil selon la revendication 2, dans lequel l'analyseur électronique est configuré pour identifier un épicentre du tremblement de terre en estimant des régions de première réception des ondes sismiques du tremblement de terre au niveau de deux ou plus des câbles à fibres optiques sur la base des mesures d'états de polarisation des faisceaux lumineux ayant voyagé sur les deux ou plus des câbles à fibres optiques.

5. Appareil selon la revendication 1, dans lequel l'analyseur électronique est configuré pour estimer un instant de première réception d'ondes sismiques d'un tremblement de terre au niveau d'un câble particulier parmi les câbles à fibres optiques sur la base des mesures d'états de polarisation des faisceaux lumineux reçus aux deux nœuds de réseau auxquels le câble particulier parmi les câbles à fibres optiques est connecté de bout en bout.

6. Appareil selon la revendication 1, dans lequel chacune des mesures d'un faisceau particulier parmi les faisceaux lumineux reçus mesure des mélanges du faisceau particulier parmi les faisceaux lumineux avec la lumière d'un oscillateur local optique (408).

7. Appareil selon la revendication 1, comprenant en outre un ou plusieurs filtres (640) pour supprimer, des mesures, des composantes fréquentielles spectralement supérieures à environ 1 Hertz.

8. Appareil selon la revendication 1, dans lequel chaque paire particulière parmi les paires de nœuds de réseau est configurée pour communiquer optiquement des données entre eux via des canaux de longueur d'onde optique différents d'un canal de longueur d'onde portant les faisceaux lumineux entre la paire particulière des paires de nœuds de réseau.

9. Appareil selon la revendication 1, dans lequel les faisceaux lumineux ne sont pas modulés pour porter des flux de données.

10. Procédé mis en œuvre par machine pour fournir des informations sur des tremblements de terre, le procédé mis en œuvre par machine comprenant :
la réception d'une paire de faisceaux lumineux à chacune d'une pluralité de paires de nœuds de réseau (LS1, LS2, LS3) ; et
la réception de mesures d'états de polarisation des paires de faisceaux lumineux, les faisceaux lumineux de chacune des paires de faisceaux lumineux ayant voyagé dans des directions opposées entre une paire respective (LS1, LS2) des paires de nœuds de réseau via un câble à fibres optiques respectif (740_{A}) connecté de bout en bout entre ceux-ci, des faisceaux différents des paires de faisceaux lumineux ayant voyagé sur des câbles différents des câbles à fibres optiques respectifs ; et
le traitement, dans des circuits électroniques, des mesures des états de polarisation d'une pluralité des paires de faisceaux lumineux pour caractériser l'un des tremblements de terre ;
dans lequel le procédé comprend :
l'émission, par un émetteur optique à multiplexage par répartition en longueur d'onde (WDM) de chacun des nœuds de réseau (LS1, LS2), d'un signal de sonde optique (224) conjointement avec des signaux optiques porteurs de données (216₃ - 216n), dans lequel le signal de sonde optique (224) a une fréquence (fs) et est situé à un bord spectral de l'un (216n) des signaux optiques porteurs de données (216₃-216n).
